# EUROPEAN PATENT SPECIFICATION

(11) **EP 0 636 809 B1**
(45) Date of publication and mention of the grant of the patent: **27.01.1999**
(21) Application number: 94111679.0
(22) Date of filing: 27.07.1994
(51) Int. Cl.: F16F 7/09, D06F 37/20, F16F 9/36

(54) **A damper for oscillating machines**
Dämpfer für oszillierende Vorrichtungen
Amortisseur pour machines oscillantes

(30) Priority: 30.07.1993 IT MI931735
(43) Date of publication of application: 01.02.1995
(73) Proprietor: C.I.M.A. COMPAGNIA ITALIANA MOLLE ACCIAIO S.P.A., I-20040 Busnago, Milan (IT)
(72) Inventor: Bellazzi, Emilio, I-20052 Monza (MI) (IT)
(74) Representative: Cicogna, Franco

(56) References cited:
- EP-A- 0 336 176
- GB-A- 1 249 644
- US-A- 2 940 552
- US-A- 4 166 522

## Description

A damper is a device capable of reducing the vibrations deriving from the oscillation phenomena of mechanisms. The damping effect shall be assured not only during normal operating conditions of the mechanism, when the oscillations have a periodical trend, but also in particular transient states when the mechanism is subjected to external forces such as shocks or sharp accelerations, either positive or negative that can produce vibrations of greater intensity.

Dampers shall also maintain unaltered their vibration reducing effect for a sufficient period to ensure an acceptable time of operation and in particular they shall be designed so that damping efficiency is not appreciably reduced after a number of work cycles that are comparable to the life of the machine to which they are applied.

The damping effect of a damper can be ensured by a squeezing of oil from one chamber into another, or by an outlet of air that is compressed by the vibration, or by friction between two parts of the device that slide over each another.

This last type is used particularly in washing machines for both household and industrial use and has to ensure a damping effect with a very low machine noise level.

The known type of vibration dampers consist essentially of a cylindrical easing inside which a cylindrical piston, in some cases provided with longitudinal fins, can move forwards and backwards with a certain friction being the two opposite ends of the cylinder and the piston connected to the casing of the machine and to the Laundry drum, respectively.

Friction between the two mobile parts (the cylinder and the piston) is assured by the above-mentioned longitudinal fins and by one or more zones provided with gaskets. In known dampers it is the piston, which is made of a hard plastic material, that bears the gaskets and moves inside the metallic cylinder. This cylinder must be of a controlled roughness and therefore must be made of drawn tube.

The document EP-A-0 336 176 discloses a damper for oscillating machines having substantially the features of the preamble of the main claim.

The object of the present invention is a vibration damper for oscillating machines and in particular for household and industrial washing machines. It consists of an external casing, essentially cylindrical in shape and of a cylindrical piston housed inside the cylindrical casing and coaxial with it, being the internal diameter of this cylindrical casing slightly greater than the external diameter of the cylindrical piston so that there is no contact between the internal surface of the casing and the external surface of the cylindrical piston. This object is achieved by a damper for oscillating machines having the features of the characterising part of the main claim.

Contact between the two parts, which determines the necessary friction to give rise to the damping effect, takes place at the point of the two circumferential gaskets located at a certain distance from each other and fixed in appropriate housings obtained in the internal wall of the external casing.

The external casing is made of hard plastic material, while the internal cylinder is made of steel.

One first significant advantage in respect of the known state of the art is the considerably reduced cost of the damper of the present invention. This is due to the fact drawn tube is no longer required for construction of the internal cylinder, as the cylinder can be manufactured from a steel strip by means of welding, without any need to smooth the inside welding of the tube thus fabricated. The possibility of having an internal cylinder made of strip welded tube permits manufacturing a cylinder with a thickness of 0.6 - 0.8 mm, with a further reduction in cost in respect of drawn tube which generally has a thickness of not than 1 mm.

The two gaskets, suitably spaced, substantially reduce the oscillation of the internal cylinder so that the latter does not rub against or come into contact with the external casing, which in any case has a larger diameter. As there is no friction the noise level is very low, and this a notable advantage, especially for household washing machines, as compared with known dampers.

Since the present-day trend is to fabricate faster and faster washing machines, even up to 1600 rpm, the absence of noise is an important advantage. Lastly, it should be stressed that the heat developed during friction on the gaskets does not involve changes that reduce in any way the efficiency of the damper of the present invention since this heat is easily disposed of through longitudinal slits made in the external casing.

For a better understanding of the invention, reference is made to the enclosed drawings that show a preferred damper embodiment, without limiting it in any way.

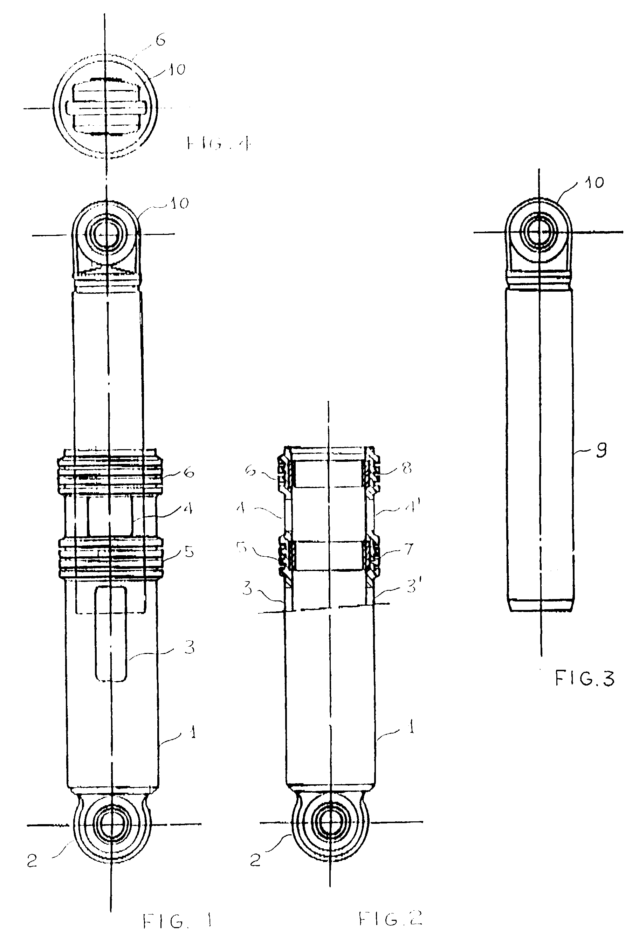

FIGURE 1 gives an overall view of the damper of this invention.

FIGURE 2 is a partial longitudinal section according to a plan containing the axis line of the external cylinder, passing through the axis line of the longitudinal slits.

FIGURE 3 is a front view of the internal cylinder.

FIGURE 4 is a top view of teh damper.

These figures illustrate: external cylinder 1 provided with eyelet 2, longitudinal slits 3 and 4, and 3' and 4' diametrically opposed and ribs 5 and 6, gaskets 7 and 8 and lastly internal cylinder 9 provided with eyelet 10.

When used, cylinder 9 is slipped into external cylinder 1, in which gaskets 7 and 8 have previously been introduced.

Eyelet 2 of the external cylinder fixes the damper to the body of the washing machine, while eyelet 10 of the internal cylinder 9 connects the damper to the oscillating drum of the washing machine.

The distance between the two gaskets 7 and 8 is such that in any case, that is for any sliding between the external cylinder 1 and internal cylinder 9, the latter is always supported by the two gaskets 7 and 8.

## Claims

1. A damper for oscillating machines, provided with suitable fastening devices, consisting of an external casing (1) of a basically cylinder form and of a cylindrical piston (9) housed inside the above-mentioned external cylinder and coaxial with the latter, directly opposed longitudinal slits (3,4; 3',4') being formed through said casing (1), characterized by the fact that the internal diameter of the cylindrical external casing (1) is slightly larger that the external diameter of the cylindrical piston so that there is no contact between the internal surface of said casing (1) and the external surface of said piston (9) and that said external cylindrical casing is provided internally, fixed in appropriate housings, with two circumferential gaskets (7,8) spaced from each other so as to abut against said piston (9) to reduce possible oscillations thereof and prevent said piston (9) from rubbing against said internal surface of said casing (1).

2. A damper for oscillating machines according to Claim 1, characterized in that there are four slits (3,4; 3',4').

3. A damper for oscillating machines according to claims 1 and 2, characterized in that the external cylindrical casing (1) is made of hard plastic material suitable for pressing and that the internal cylindrical piston (9) consists of a metallic tube with longitudinal welding.

## Patentansprüche

1. Ein Dämpfer für oszillierende Vorrichtungen, der mit geeigneten Befestigungsvorrichtungen ausgestattet ist und aus einem Außengehäuse (1) mit einer im wesentlichen zylindrischen Form und einem zylindrischen Kolben (9) besteht, der in dem vorstehend erwähnten äußeren Zylinder untergebracht ist und koaxial mit diesem verläuft, wobei direkt gegenüberliegend dazu langgestreckte Schlitze (3, 4; 3', 4') in diesem Gehäuse (1) gebildet sind, dadurch gekennzeichnet, daß der innere Durchmesser des zylindrischen Außengehäuses (1) etwas größer ist als der äußere Durchmesser des zylindrischen Kolbens, so daß zwischen der inneren Oberfläche dieses Gehäuses (1) und der äußeren Oberfläche dieses Kolbens (9) keine Berührung stattfindet, und daß dieses zylindrische Außengehäuse in seinem Inneren mit zwei umlaufenden Dichtungen (7, 8) bereitgestellt ist, die in geeigneten Aufnahmen untergebracht und so zueinander versetzt sind, daß sie gegen diesen Kolben (9) stoßen, um dessen mögliche Schwingungen zu verringern und diesen Kolben (9) daran zu hindem, gegen diese Innenfläche dieses Gehäuses (1) zu reiben.

2. Ein Dämpfer für oszillierende Vorrichtungen nach Anspruch 1, dadurch gekennzeichnet, daß vier Schlitze (3, 4; 3', 4') vorliegen.

3. Ein Dämpfer für oszillierende Vorrichtungen nach Anspruch 1 und 2, dadurch gekennzeichnet, daß das zylindrische Außengehäuse (1) aus hartem Kunststoffmaterial gefertigt ist, das für das Pressen geeignet ist, und daß der innere, zylindrische Kolben (9) aus einem metallenen Rohr mit einer längsseitigen Schweißnaht besteht.

## Revendications

1. Amortisseur pour machines oscillantes, muni de dispositifs de fixation appropriés, consistant en une enveloppe ou corps extérieur ou externe (1) présentant une forme sensiblement cylindrique, et en un piston cylindrique (9) logé à l'intérieur du cylindre extérieur ou externe mentionné ci-dessus et coaxial par rapport audit cylindre, des fentes longitudinales directement opposées (3, 4 ; 3', 4') étant formées au travers dudit corps (1), caractérisé par le fait que le diamètre interne du corps externe cylindrique (1) est légèrement plus grand que le diamètre externe du piston cylindrique de telle façon qu'il n'y a aucun contact entre la surface interne dudit corps (1) et la surface externe dudit piston (9) et que ledit corps externe cylindrique est muni à l'intérieur, fixés dans des logements appropriés, de deux joints périphériques ou circonférentiels (7, 8) espacés l'un de l'autre de façon à être au contact contre ledit piston (9) afin de réduire ses possibles oscillations et d'éviter que ledit piston (9) ne frotte contre la surface interne dudit corps (1).

2. Amortisseur pour machines oscillantes selon la revendication 1, caractérisé en ce qu'il comprend quatre fentes (3, 4 ; 3', 4').

3. Amortisseur pour machines oscillantes selon les revendications 1 et 2, caractérisé en ce que le corps cylindrique externe (1) est fabriqué en un matériau plastique dur résistant à la pression ou fabrication sous pression (« suitable for pressing »), et en ce que le piston cylindrique interne (9) consiste en un tube métallique avec soudure longitudinale.
